# EUROPEAN PATENT SPECIFICATION

(11) **EP 3 285 178 B1**
(45) Date of publication and mention of the grant of the patent: **22.05.2019**
(21) Application number: 16779500.4
(22) Date of filing: 18.03.2016
(51) Int. Cl.: G06F 17/30

(54) **DATA QUERY METHOD IN CROSSING-PARTITION DATABASE, AND CROSSING-PARTITION QUERY DEVICE**
DATENABFRAGEVERFAHREN IN KREUZPARTITIONSDATENBANK UND KREUZPARTITIONABFRAGEVORRICHTUNG
PROCÉDÉ D'INTERROGATION DE DONNÉES DANS UNE BASE DE DONNÉES DE PARTITION/CROISEMENT ET DISPOSITIF D'INTERROGATION DE PARTITION/CROISEMENT

(30) Priority: 16.04.2015 CN 201510180744
(43) Date of publication of application: 21.02.2018
(73) Proprietor: Huawei Technologies Co., Ltd., Longgang District Shenzhen, Guangdong 518129 (CN)
(72) Inventor: YANG, Yidong, Shenzhen Guangdong 518129 (CN); ZHU, Wenqi, Shenzhen Guangdong 518129 (CN); ZHANG, Qing, Shenzhen Guangdong 518129 (CN); YAO, Li, Shenzhen Guangdong 518129 (CN); ZHU, Zhongchu, Shenzhen Guangdong 518129 (CN)
(74) Representative: Epping - Hermann - Fischer
(86) International application number: PCT/CN2016/076774
(87) International publication number: WO 2016/165525

(56) References cited:
- CN-A- 101 916 261
- CN-A- 103 927 331
- CN-A- 103 995 879
- US-A- 5 596 744
- US-A1- 2007 027 860
- US-B2- 8 396 862
- Anonymous: "Terminology: Transparent sharding", , 10 April 2015 (2015-04-10), pages 1-7, XP055435183, Retrieved from the Internet: URL:http://www.dbms2.com/2011/02/24/transp arent-sharding/ [retrieved on 2017-12-14]

## Description

### TECHNICAL FIELD

The present invention relates to the database field, and in particular, to a method and an apparatus for querying data in cross-shard databases.

### BACKGROUND

With a greater volume of service data to be processed in various types of IT application scenarios, such as centralized system construction and massive user Internet applications, single physical database-based various software and hardware scaling up (scale up) technologies based on a single physical database cannot meet storage capacity and calculation performance requirements. Therefore, a data sharding (sharding) technology is developed. As an important scaling out (scale out) database design principle, the data sharding splits service data into multiple different physical databases, thereby effectively alleviating a performance bottleneck of a single database and improving overall data processing capability of a system.

According to a splitting rule used during data sharding, the data sharding is classified into two types: vertical sharding (or sharding) and horizontal sharding (table splitting). The vertical sharding is splitting, on a table basis, tables used in different service modules into different physical databases based on service logic. The horizontal sharding is splitting data of a table into different physical databases based on a sharding rule, such as hash or range selection, of a particular field or multiple fields. In an application scenario in which service logic is complex and a data volume of a single table is extremely large, a mixture of vertical sharding and horizontal sharding may be used, that is, vertical sharding is performed among tables according to the service logic first, and then horizontal sharding is performed on a table having a relatively large data volume.

Although the data sharding technology effectively resolves a problem of a large data volume, distributed data storage also causes complexity of data query processing. Vertical sharding may be performed based on the service logic, horizontal sharding may be performed within a vertical shard according to aggregation, and data closely associated with each other is classified into a same shard, so that data queries in most scenarios are localized. However, there still exists a scenario in which cross-shard data access, especially cross-shard data association, is needed. Currently, a federated database is a manner of improving scalability and managing a capacity limit in a database layer of an application program. By means of this manner, one or more tables may be horizontally split into multiple databases. Data of one or more tables is stored in different physical databases, and an SQL database does not support a cross-physical database association operation. Therefore, the cross-physical database association operation needs to be implemented in an application program. For example, an SQL request needs to associate data in two databases; therefore, to query data in the two databases, a separate query needs to be performed on each database, and data returned in the queries is finally associated in an application program.

To support a cross-database query operation, a federated database technology provides a fan-out query (Fan-out query) mechanism. The fan-out query includes two parts: a member query (Member query) and a summary query. The member query refers to a partial query sending to all query-related databases, and the summary query refers to processing after the member query and is responsible for summarizing results of member queries into a final result set.

However, the foregoing cross-database associative query has at least the following disadvantages: An application program needs to write, based on a fan-out query mechanism, a complex query SQL to process details such as queries on databases and summary, but cannot use an original query SQL in a non-cross-database scenario, resulting in that storage details of physical databases cannot be masked. Therefore, in a query process, a large amount of useless data may need to be obtained. In addition, a large quantity of data exchanges in cross-shard database access also causes a heavy network load, and logic of a non-sharding SQL cannot be used.

From US 5,596,744 apparatuses and methods for global architectures for providing users with transparent integrated access to heterogeneous database management systems are known. Transparent access is obtained by coupling a federated architecture with an Inter-Site Transaction Servive architecture. The online-article Anonymous: "Terminology: Transparent sharding" (February 24, 2011, http://www.dbms2.com/2011/02/24/transparent-sharding/) defines the term "transparent sharding" to denote a data management strategy in which data is assigned to multiple servers as if it was managed by just one.

### SUMMARY

For the foregoing problem, an objective of the present invention is to provide a method and an apparatus for querying data in cross-shard databases , to improve efficiency and a success rate of a cross-shard data query. The invention is defined by the attached claims.

According to a first aspect, the present invention provides a method for querying data in cross-shard databases, including:
receiving a query request, where the query request includes a query condition, identifiers of two tables used in an association operation, and an association field;
querying, according to the identifiers of the two tables used in the association operation, statistics information of respective shard databases in which the two tables used in the association operation are located;
sending, according to the statistics information and the query condition, a driving table query request to a shard database in which a driving table is located; and receiving a first query result set returned by the shard database in which the driving table is located, where one table of the two tables used in the association operation is the driving table, the other table is a non-driving table, and the driving table is a table preferentially queried in the two tables used in the association operation;
deduplicating association field values in the first query result set, and sending a result set delivery request and deduplicated association field values to a shard database in which the non-driving table is located, so that the shard database in which the non-driving table is located generates temporary table data, where the temporary table data includes the deduplicated association field values; and
sending a non-driving table query request to the shard database in which the non-driving table is located, and receiving a second query result set returned by the shard database in which the non-driving table is located, where the second query result set is obtained by means of querying according to the non-driving table query request and the temporary table data by the shard database in which the non-driving table is located.

In a first possible implementation manner of the first aspect, the sending, according to the statistics information and the query condition, a driving table query request to a shard database in which a driving table is located, and receiving a first query result set returned by the shard database in which the driving table is located specifically includes: separately calculating, according to the statistics information and the query condition and by using a predefined calculation model, resources consumed by separately querying the two tables used in the association operation, where a table consuming fewer resources is the driving table, sending the driving table query request to the shard database in which the driving table is located, and receiving the first query result set returned by the shard database in which the driving table is located.

In a second possible implementation manner of the first aspect, if the shard database in which the driving table is located specifically includes two or more shard databases, the sending a driving table query request to a shard database in which a driving table is located; and receiving a first query result set returned by the shard database in which the driving table is located specifically includes: sending driving table query requests to all shard databases in which the driving table is located, and receiving first query result sets returned by all the shard databases in which the driving table is located; or sending a driving table query request to a shard database which meets the query condition and in which the driving table is located, and receiving a first query result set returned by the shard database which meets the query condition and in which the driving table is located.

With reference to the second possible implementation manner of the first aspect, in a third possible implementation manner of the first aspect, the method further includes: saving a first query result according to a hash algorithm.

In a second possible implementation manner of the first aspect, the method further includes: associating the first query result set with the second query result set according to the association field, to obtain a third query result set.

According to a second aspect, the present invention further provides an apparatus for querying data in cross-shard databases, including:
a receiving module, configured to receive a query request, where the query request includes a query condition, identifiers of two tables used in an association operation, and an association field;
a first query module, configured to query, according to the identifiers of the two tables used in the association operation, statistics information of respective shard databases in which the two tables used in the association operation are located;
a second query module, configured to: send, according to the statistics information and the query condition, a driving table query request to a shard database in which a driving table is located, and receive a first query result set returned by the shard database in which the driving table is located, where one table of the two tables used in the association operation is the driving table, the other table is a non-driving table, and the driving table is a table preferentially queried in the two tables used in the association operation;
a temporary table data processing module, configured to: deduplicate association field values in the first query result set, and send a result set delivery request and deduplicated association field values to a shard database in which the non-driving table is located, so that the shard database in which the non-driving table is located generates temporary table data, where the temporary table data includes the deduplicated association field values; and
a third query module, configured to send a non-driving table query request to the shard database in which the non-driving table is located, and receive a second query result set returned by the shard database in which the non-driving table is located, where the second query result set is obtained by means of querying according to the non-driving table query request and the temporary table data by the shard database in which the non-driving table is located.

In a first possible implementation manner of the second aspect, the second query module is specifically configured to: separately calculate, according to the statistics information and the query condition and by using a predefined calculation model, resources consumed by separately querying the two tables used in the association operation, where a table consuming fewer resources is the driving table, send the driving table query request to the shard database in which the driving table is located, and receive the first query result set returned by the shard database in which the driving table is located.

In a second possible implementation manner of the second aspect, if the shard database in which the driving table is located specifically includes two or more shard databases, the second query module is specifically configured to: send driving table query requests to all shard databases in which the driving table is located, and receive first query result sets returned by all the shard databases in which the driving table is located; or send a driving table query request to a shard database which meets the query condition and in which the driving table is located, and receive a first query result set returned by the shard database which meets the query condition and in which the driving table is located.

In a third possible implementation manner of the second aspect, the apparatus further includes: a storage module, configured to save a first query result according to a hash algorithm.

In a fourth possible implementation manner of the second aspect, the apparatus further includes: an association module, configured to associate the first query result set with the second query result set according to the association field, to obtain a third query result set.

According to the solutions of the present invention, when data querying is performed in cross-shard databases, a driving table is first queried to obtain a first query result set; then association field values in the first query result set are deduplicated, and a result set delivery request and deduplicated association field values are sent to a shard database in which a non-driving table is located, so that temporary table data including the deduplicated association field values may be generated in the shard database in which the non-driving table is located; next, a non-driving table query request is sent to the shard database in which the non-driving table is located, and a second query result set returned by the shard database in which the non-driving table is located is received. Because the second query result set is obtained by querying an association according to the non-driving table query request and the temporary table data by the shard database in which the non-driving table is located, a processing process of querying the association in the cross-shard databases is completed in the shard database in which the non-driving table is located, and deduplicated association field values are sent to the shard database in which the non-driving table is located. Therefore, in the querying process, it is unnecessary to obtain a large amount of useless data, thereby improving efficiency and a success rate of querying data in the cross-shard databases.

### BRIEF DESCRIPTION OF DRAWINGS

To describe the technical solutions in the present invention more clearly, the following briefly describes the accompanying drawings required for describing the implementation manners. Apparently, the accompanying drawings in the following description show merely some implementation manners of the present invention, and a person of ordinary skill in the art may still derive other drawings from these accompanying drawings without creative efforts.
FIG. 1 is a schematic structural diagram of a network environment for querying data in cross-shard databases according to the present invention;
FIG. 2 is a schematic structural diagram of an apparatus for querying data in cross-shard databases according to the present invention;
FIG. 3 is a schematic structural diagram of another apparatus for querying data in cross-shard databases according to the present invention;
FIG. 4 is a schematic structural diagram of an apparatus for querying data in cross-shard databases according to the present invention;
FIG. 5 is a schematic flowchart of a method for querying data in cross-shard databases according to the present invention; and
FIG. 6 is a schematic flowchart of another method for querying data in cross-shard databases according to the present invention.

### DESCRIPTION

The present invention provides a method and an apparatus for querying data in cross-shard databases, to improve efficiency and a success rate of querying data in cross-shard databases.

To facilitate understanding of the present invention, the following describes a database system according to the present invention.

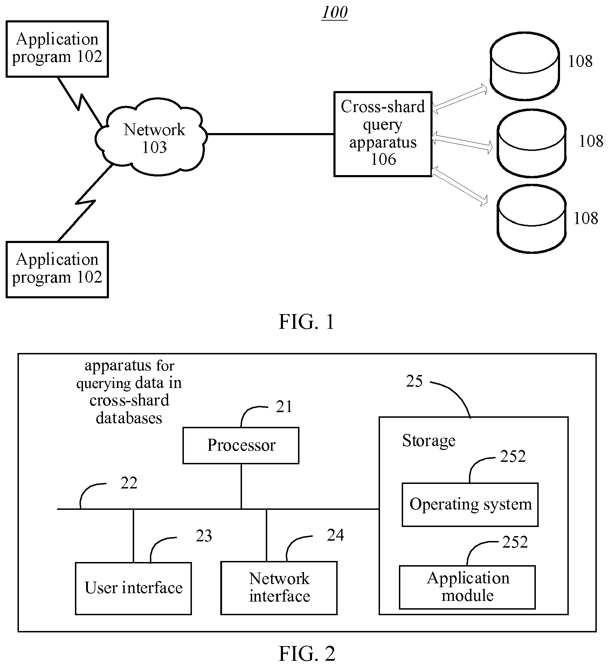

FIG. 1 is a schematic diagram of a network environment according to the present invention. An application program 102 refers to a computer program that can provide various specific functions, and the computer program includes, but is not limited to, a charging application, an Internet browser, a multimedia player, and the like. The application program may access a database by using a communications network 103. Multiple application programs access an apparatus for querying data in cross-shard databases 106. The apparatus for querying data in cross-shard databases 106 receives an operation command of the application program for data in the database, and connects to and accesses the database. Further, the apparatus for querying data in cross-shard databases 106 is connected to multiple physical databases 108. The physical database 108 stores data in the database and is a structured data set. The apparatus for querying data in cross-shard databases 106 may drive the physical database 108 and receive data returned by the physical database. The apparatus 106 for querying data in cross-shard databases is located between the application program 102 and various heterogeneous physical databases 108. The apparatus 106 for querying data in cross-shard databases provides a transparent data access interface to the application program 102, masks differences between the physical databases 108, supports vertical sharding and horizontal sharding, and provides multiple data sharding policies to meet different service requirements.

Referring to FIG. 2, FIG. 2 is a schematic structural diagram of an apparatus for querying data in cross-shard databases according to the present invention. The apparatus is configured to perform a method for querying data in cross-shard databases according to the present invention. As shown in FIG. 2, the cross-shard query apparatus for querying data in cross-shard databases includes: at least one processor 21, such as a CPU, at least one network interface 24 or another user interface 23, a storage 25, and at least one communications bus 22. The communications bus 22 is configured to implement communication between these components. The user interface 23 may optionally include a USB interface and another standard interface or wired interface. The network interface 24 may optionally include a Wi-Fi interface and another wireless interface. The storage 25 may include a high-speed RAM memory, and may further include a non-volatile memory (non-volatile memory), for example, at least one magnetic disk storage. The storage 25 may optionally include at least one storage apparatus far away from the processor 21.

In some implementation manners, the storage 25 stores the following elements, an executable module or a data structure, or a subset thereof, or an extension set thereof:
an operating system 251, including various system programs and configured to implement various basic services and process a hardware-based task; and
an application module 252, including various application programs such as a device control service program and a device identification service program, and configured to implement various application services.

Specifically, the processor 21 is configured to invoke a program stored in the storage 25, to perform the following operations:
receiving a query request, where the query request includes a query condition, identifiers of two tables used in an association operation, and an association field;
querying, according to the identifiers of the two tables used in the association operation, statistics information of respective shard databases in which the two tables used in the association operation are located;
sending, according to the statistics information and the query condition, a driving table query request to a shard database in which a driving table is located, and receiving a first query result set returned by the shard database in which the driving table is located, where one table of the two tables used in the association operation is the driving table, the other table is a non-driving table, and the driving table is a table preferentially queried in the two tables used in the association operation;
deduplicating association field values in the first query result set, and sending a result set delivery request and deduplicated association field values to a shard database in which the non-driving table is located, so that the shard database in which the non-driving table is located generates temporary table data, where the temporary table data includes the deduplicated association field values; and
sending a non-driving table query request to the shard database in which the non-driving table is located, and receiving a second query result set returned by the shard database in which the non-driving table is located, where the second query result set is obtained by means of querying according to the non-driving table query request and the temporary table data by the shard database in which the non-driving table is located.

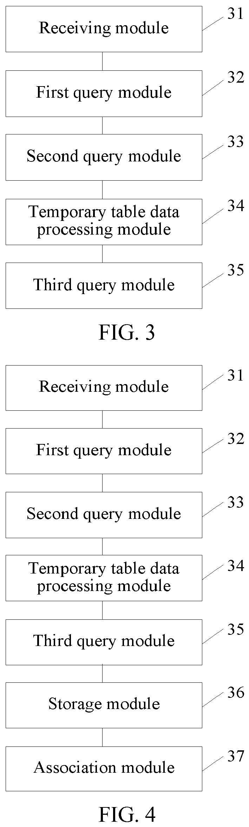

Referring to FIG. 3, FIG. 3 is a schematic structural diagram of another apparatus for querying data in cross-shard databases according to the present invention. The apparatus is configured to perform a method for querying data in cross-shard databases according to the present invention. As shown in FIG. 3, the apparatus for querying data in cross-shard databases includes:
a receiving module 31, configured to receive a query request, where the query request includes a query condition, identifiers of two tables used in an association operation, and an association field;
a first query module 32, configured to query, according to the identifiers of the two tables used in the association operation, statistics information of respective shard databases in which the two tables used in the association operation are located;
a second query module 33, configured to: send, according to the statistics information and the query condition, a driving table query request to a shard database in which a driving table is located, and receive a first query result set returned by the shard database in which the driving table is located, where one table of the two tables used in the association operation is the driving table, the other table is a non-driving table, and the driving table is a table preferentially queried in the two tables used in the association operation;
a temporary table data processing module 34, configured to: deduplicate association field values in the first query result set, and send a result set delivery request and deduplicated association field values to a shard database in which the non-driving table is located, so that the shard database in which the non-driving table is located generates temporary table data, where the temporary table data includes the deduplicated association field values; and
a third query module 35, configured to: send a non-driving table query request to the shard database in which the non-driving table is located, and receive a second query result set returned by the shard database in which the non-driving table is located, where the second query result set is obtained by means of querying according to the non-driving table query request and the temporary table data by the shard database in which the non-driving table is located.

Specifically, the second query module 33 is specifically configured to: separately calculate, according to the statistics information and the query condition and by using a predefined calculation model, resources consumed by separately querying the two tables used in the association operation, where a table consuming fewer resources is the driving table, send the driving table query request to the shard database in which the driving table is located, and receive the first query result set returned by the shard database in which the driving table is located.

Specifically, if the shard database in which the driving table is located specifically includes two or more shard databases, the second query module 33 is specifically configured to: send driving table query requests to all shard databases in which the driving table is located, and receive first query result sets returned by all the shard databases in which the driving table is located; or send a driving table query request to a shard database which meets the query condition and in which the driving table is located, and receive a first query result set returned by the shard database which meets the query condition and in which the driving table is located.

Further, as shown in FIG. 4, the apparatus for querying data in cross-shard databases further includes: a storage module 36, configured to save a first query result according to a hash algorithm.

Further, as shown in FIG. 4, the apparatus for querying data in cross-shard databases further includes: an association module 37, configured to associate the first query result set with the second query result set according to the association field, to obtain a third query result set.

To describe the present invention more clearly, the following briefly describes an operation process of performing the foregoing examples by the apparatus for querying data in cross-shard databases.

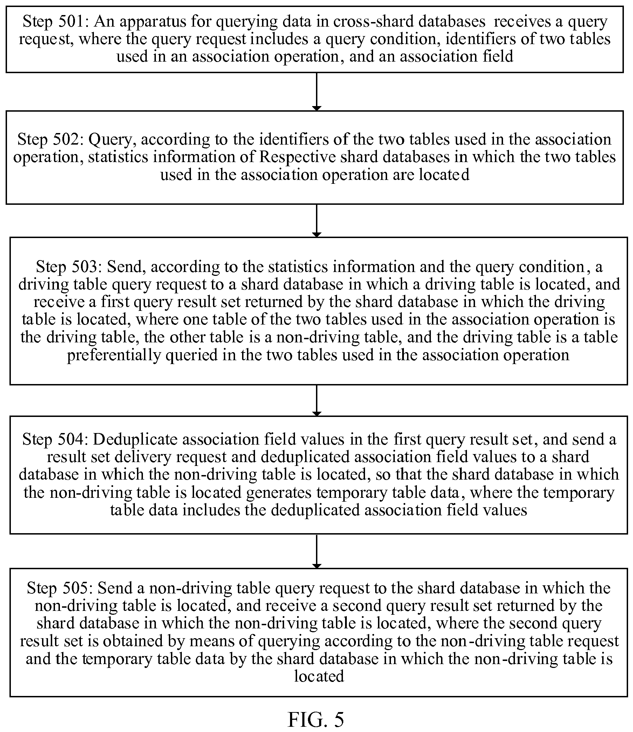

FIG. 5 is a schematic flowchart of a method for querying data in cross-shard databases according to the present invention. The method specifically includes:
Step 501: A apparatus for querying data in cross-shard databases receives a query request, where the query request includes a query condition, identifiers of two tables used in an association operation, and an association field.
Step 502: Query, according to the identifiers of the two tables used in the association operation, statistics information of respective shard databases in which the two tables used in the association operation are located.
Step 503: Send, according to the statistics information and the query condition, a driving table query request to a shard database in which a driving table is located, and receive a first query result set returned by the shard database in which the driving table is located, where one table of the two tables used in the association operation is the driving table, the other table is a non-driving table, and the driving table is a table preferentially queried in the two tables used in the association operation.
Step 504: Deduplicate association field values in the first query result set, and send a result set delivery request and deduplicated association field values to a shard database in which the non-driving table is located, so that the shard database in which the non-driving table is located generates temporary table data, where the temporary table data includes the deduplicated association field values.
Step 505: Send a non-driving table query request to the shard database in which the non-driving table is located, and receive a second query result set returned by the shard database in which the non-driving table is located, where the second query result set is obtained by means of querying according to the non-driving table query request and the temporary table data by the shard database in which the non-driving table is located.

According to the solution of the present invention, when data querying is performed in cross-shard databases, a driving table is first queried to obtain a first query result set; then association field values in the first query result set are deduplicated, and a result set delivery request and deduplicated association field values are sent to a shard database in which a non-driving table is located, so that temporary table data including the deduplicated association field values may be generated in the shard database in which the non-driving table is located; next, a non-driving table query request is sent to the shard database in which the non-driving table is located, and a second query result set returned by the shard database in which the non-driving table is located is received. Because the second query result set is obtained by querying an association according to the non-driving table query request and the temporary table data by the shard database in which the non-driving table is located, a processing process of querying the association in the cross-shard databases is completed in the shard database in which the non-driving table is located, and deduplicated association field values are sent to the shard database in which the non-driving table is located. Therefore, in the querying process, it is unnecessary to obtain a large amount of useless data, thereby improving efficiency and a success rate of querying data in the cross-shard databases.

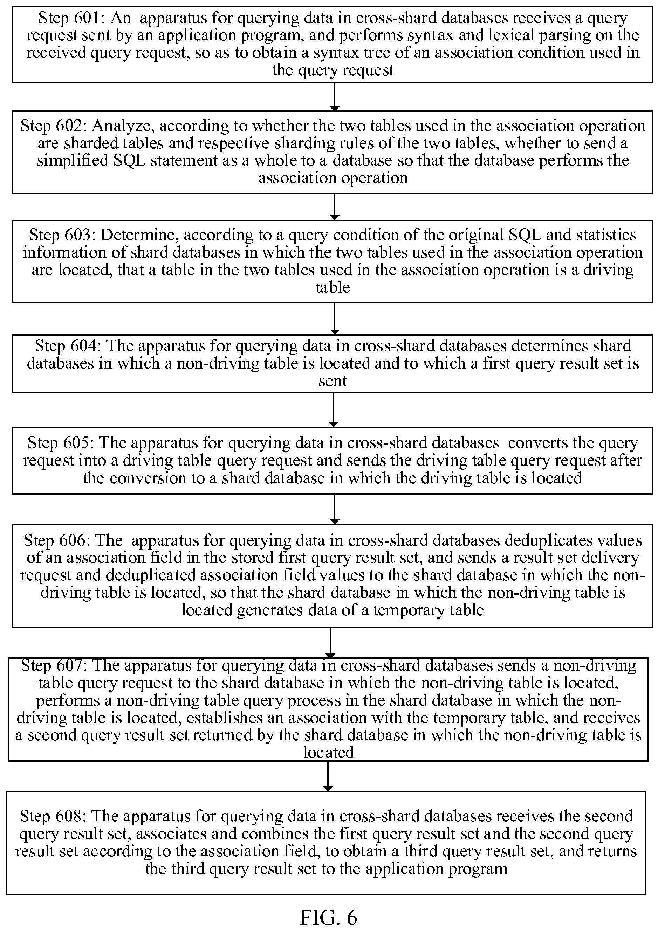

Referring to FIG. 6, FIG. 6 is a flowchart of a method for querying data in cross-shard databases according to the present invention. The method specifically includes:
Step 601: A apparatus for querying data in cross-shard databases receives a query request sent by an application program, where the query request is specifically an SQL statement, which is referred to as an original SQL statement herein, and performs syntax and lexical parsing on the received query request, so as to obtain a syntax tree of an association condition used in the original SQL statement. The syntax tree of the association condition may include information such as identifiers of two tables used in an association operation, a query condition, an association relationship between the two tables, and an association field. The association relationship herein includes a natural join, an equal join, a Cartesian join, and the like. The query condition may be specifically a filter expression or a condition expression of the SQL statement. In this example of the present invention, the identifiers of the two tables used in the association operation are specifically table names or IDs of the two tables used in the association operation.
Step 602: The apparatus for querying data in cross-shard databases determines, according to the identifiers of the two tables used in the association operation, whether the two tables used in the association operation are sharded tables; if the two tables are sharded tables, the apparatus for querying data in cross-shard databases determines respective sharding rules of the two tables used in the association operation and analyzes, according to whether the two tables used in the association operation are sharded tables and the respective sharding rules of the two tables, whether to send a simplified SQL statement as a whole to a database so that the database performs the association operation. Herein, the sending a simplified SQL statement to a database includes the following scenarios:
   1. If the two tables used in the association operation are both non-sharded tables, that is, all data of the two tables is stored in each physical database, that is, any physical database stores all the data of the two tables, the simplified SQL statement may be sent as a whole to any physical database for association processing. The simplified SQL statement refers to an SQL statement that has been processed for the query. Generally, the SQL statement after simplification is a simplified SQL statement, and generally includes only a query statement but does not include any non-query instructions such as ordering, grouping, and the like.
      In the present invention, there may be many manners of querying whether the associated tables are non-sharded tables. For example, whether the associated two tables are non-sharded tables is learned from an XML configuration file stored in middleware; or whether the associated tables are non-sharded tables is determined according to data that is related to the associated two tables and that is stored in a cache.
   2. If one of the two tables used in the association operation is a sharded table, as shown in first table, the other is a non-sharded table, as shown in first table, and data of first table may be distributed in all shard databases, the simplified SQL statement is sent as a whole to all the shard databases in which the data of first Table may be distributed, for the association operation.
   3. If the two tables (such as third table and forth table) used in the association operation are both sharded tables, where the association field includes all sharding fields of the two tables and the association relationship is an equal join, the simplified SQL statement may be sent as a whole to all shards in which data of third table and forth table may exist.
   4. In cases other than the foregoing cases, the association rule cannot be sent as a whole to each physical database. In this case, step 603 is performed.
Step 603: The apparatus for querying data in cross-shard databases queries, according to the identifiers of the two tables used in the association operation, statistics information of respective shard databases in which the two tables used in the association operation are located; and determines, according to the query condition of the original SQL and the statistics information of the shard databases in which the two tables used in the association operation are located, that one table in the foregoing two tables used in the association operation is a driving table, where the driving table herein refers to a table which is preferentially queried in the two tables used in the association operation and of which a query result is associated with another table. The statistics information may include one or more of the following: a quantity of table records in a shard database, a quantity of shards, field information, a degree of aggregation, a histogram, or network transmission costs.
   According to the statistics information of each shard database as well as the condition expression of the original SQL and by using a predefined calculation model, resources consumed, in a distributed environment, by separately querying the two tables used in the association operation are separately calculated, and a table consuming fewer resources is selected as the driving table. Step 604: The apparatus for querying data in cross-shard databases determines shard databases in which a non-driving table is located and to which a first query result set is sent.
   Shard database in which the non-driving table is located and to which the first query result set needs to be sent are determined according to the association relationship and a sharding rule of a non-driving table. If the non-driving table is sharded according to a hash rule, shard databases to which the first query result set is sent cannot be statically determined, and the first query result set needs to be sent to all shard databases in which the non-driving table is located. If the non-driving table is sharded according to a data range sequence, a shard database to which the first query result set is sent may be statically determined according to the condition expression. Step 605: The apparatus for querying data in cross-shard databases converts the query request into a driving table query request and sends the driving table query request after the conversion to a shard database in which the driving table is located, so that a query operation can be performed in the shard database in which the driving table is located; and after the query operation is performed, the shard database returns the first query result set to the apparatus for querying data in cross-shard databases. If the driving table is distributed in multiple shard databases, the driving table query request needs to be sent to all the shard databases in which the driving table is located, so that all the shard databases perform the query operation concurrently. The apparatus for querying data in cross-shard databases stores, in memory, first query result sets returned by all the shard databases of the foregoing driving table. In addition, for ease of subsequent combination, the apparatus for querying data in cross-shard databases may also set up, according to the association field, a hash table to store the query result sets. If the query results exceed a limit of the memory, a batch storage manner is used.
Step 606: The apparatus for querying data in cross-shard databases deduplicates association field values in the stored first query result set, and sends a result set delivery request and deduplicated association field values to the shard database in which the non-driving table is located, so that the shard database in which the non-driving table is located generates temporary table data.
   If the non-driving table exists in multiple shard databases, the apparatus for querying data in cross-shard databases concurrently sends the result set delivery request and the deduplicated association field values to the multiple shard databases. Each shard database may create a temporary table in advance. For example, if the shard databases create temporary tables when the databases are created, when receiving the result set delivery request and the deduplicated association field values, the shard databases generate temporary table data in the created temporary tables. The shard databases may also create temporary tables when receiving the result set delivery request and the deduplicated association field values, and generate temporary table data in the temporary tables. The temporary table data herein includes the deduplicated association field values. Because the temporary table data is related to a specific service, only the service itself may identify the temporary table data, while other services cannot identify the temporary table data.
Step 607: The apparatus for querying data in cross-shard databases sends a non-driving table query request to the shard database in which the non-driving table is located, performs a non-driving table query process in the shard database in which the non-driving table is located, establishes an association with the temporary table, and receives a second query result set returned by the shard database in which the non-driving table is located. The second query result set is obtained by means of querying according to the non-driving table query request and the temporary table data by the shard database in which the non-driving table is located.
Step 608: The apparatus for querying data in cross-shard databases receives the second query result set, associates and combines the first query result set and the second query result set according to the association field, to obtain a third query result set, and returns the third query result set to the application program.

The following uses a specific example to describe the foregoing method for querying data in cross-shard databases. It is assumed that the original query SQL submitted by the application program is:
SELECT C.CUST_ID, C.NAME, O.ORDER_ID FROM CUSTOMER C, ORDER O WHERE C.BIRTHDAY='2014-08-25' AND C.GENDER = 'F' AND O.PRICE<300 AND C.CUST_ID=O.CUS1T_ID.

After receiving the SQL statement, the apparatus for querying data in cross-shard databases performs syntax and lexical parsing on the SQL statement, so as to obtain a syntax tree of an association condition used in the SQL statement. Specifically, the SQL statement relates to a table CUSTOMER and a table ORDER. The apparatus for querying data in cross-shard databases obtains basic information of the table CUSTOMER and the table ORDER. The basic information may be stored in the apparatus for querying data in cross-shard databases locally. Alternatively, the basic information may be stored in a physical database, and then is obtained by the apparatus for querying data in cross-shard databases from the physical database. The basic information of the table CUSTOMER and the table ORDER is shown in Table 1:

**Table 1**

| | CUSTOMER | ORDER |
|---|---|---|
| Sharding field | CUST_ID | ORDER_ID |
| Sharding rule | Hash | Hash |
| Quantity of shards | 8 | 4 |
| Data volume | 125000 ^{∗} 8 = 1000000 | 1000000 ^{∗} 4 |

By analyzing the basic information of the table CUSTOMER and the table ORDER, the apparatus for querying data in cross-shard databases may obtain that the table CUSTOMER and the table ORDER are both sharded tables. However, because sharding fields of the table CUSTOMER and the table ORDER are different, a simplified SQL statement cannot be sent as a whole to shards in which the two tables are located for an association operation. A cross-shard association operation exists. In this case, a driving table needs to be determined in the table CUSTOMER and the table ORDER according to a query condition of the original SQL statement and statistics information of physical databases in which shards of the two tables used in the association operation are located. The apparatus for querying data in cross-shard databases separately calculates, according to the basic information of the table CUSTOMER and the table ORDER as well as query condition expressions "C.BIRTHDAY='2014-08-25' AND C.GENDER = 'F'" and "O.PRICE<300" and by using a predefined calculation model, resources consumed by separately querying the table CUSTOMER and the table ORDER, and determines a table consuming fewer resources as the driving table. Because a quantity of records of the table CUSTOMER is less than a quantity of records of the table ORDER, and because "C.BIRTHDAY='2014-08-25"' is used to query a determined value while "O.PRICE<300" is used to query a value within a range, compared with "O.PRICE<300", "C.BIRTHDAY='2014-08-25"' has better selectivity. In addition, a quantity of shards of the table ORDER is four, which is less than that of the table CUSTOMER, and network overheads caused by sending the first query result set to the table ORDER are fewer. Therefore, according to a calculation result, it can be obtained that resource consumption caused by querying the table CUSTOMER is less than resource consumption caused by querying the table ORDER, and therefore, the table CUSTOMER is selected as the driving table.

The apparatus for querying data in cross-shard databases determines that the table ORDER uses a hash sharding rule, and cannot statically select a shard database of the table ORDER, to which the first query result set is sent. Therefore, the first query result set needs to be sent to all shard databases of the table ORDER.

In this case, the apparatus for querying data in cross-shard databases converts the original SQL statement into a driving table SQL statement. After the conversion, the following form is obtained: SELECT C.CUST_ID, C.NAME FROM CUSTOMER C WHERE C.BIRTHDAY = '2014-08-25' AND C.GENDER = 'F'. The apparatus for querying data in cross-shard databases sends the SQL statement after the conversion to eight shard databases of the table CUSTOMER and concurrently performs the driving table SQL query operation at the same time.

In this way, because query results are completed in the eight shard databases, a query result set is relatively small, and the query result set does not exceed a limit of storage memory. After all first query result sets are returned, a hash table is set up according to a key field, to save the first query result sets.

In this case, the apparatus for querying data in cross-shard databases deduplicates association field values in the stored first query result sets according to association field values in the original SQL statement, and sends a result set delivery SQL statement and deduplicated association field values to shard databases in which a non-driving table is located. Specifically, the result set delivery SQL is specifically: INSERT INTO TEMP (F) VALUES (:PARAM).

Each shard database in which the non-driving table is located concurrently performs the result set delivery SQL, and the deduplicated association field values are inserted to a specified temporary table of the shard database in which the table ORDER is located, to become data of the temporary table.

The apparatus for querying data in cross-shard databases converts the original SQL into a non-driving table query SQL, and sends the non-driving table query SQL to the shard databases in which the non-driving table is located. Specifically, the non-driving table query SQL is:
SELECT O.CUST_ID, O.ORDER ID
FROM ORDER O, TEMP T
WHERE O.PRICE < 300 AND O.CUST_ID = T.F

In this way, local association of the shard databases in which the non-driving table is located is implemented, a second query result set is generated, and the second query result set is sent to the apparatus for querying data in cross-shard databases.

Then the apparatus for querying data in cross-shard databases uses a hash association algorithm to finally associate the first query result set and the second query result set, to obtain a final third query result set, and returns the third result set to the application program.

In this solution, a driving table is selected by calculating comprehensive table query costs, and result sets are delivered in batches to a shard database in which a non-driving table is located, so that network overheads are minimized. Compared with a manner of extracting data of the two tables to a data middleware layer to complete association in an existing technical solution, the network overheads are significantly reduced. Based on implementation of features of a temporary table of a physical database, result set delivery operations on different joins can be effectively isolated by means of a database capability, so as to simplify logic of the data middleware layer.

A person of ordinary skill in the art may understand that all or some of the processes of the methods in the examples may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

## Claims

1. A method for querying data in cross-shard databases (108), comprising:
receiving a query request, wherein the query request comprises a query condition, identifiers of two tables used in an association operation, and an association field;
querying, according to the identifiers of the two tables used in the association operation, statistics information of respective shard databases (108) in which the two tables used in the association operation are located;
sending, according to the statistics information and the query condition, a driving table query request to a shard database (108) in which a driving table is located, and receiving a first query result set returned by the shard database (108) in which the driving table is located, wherein one table of the two tables used in the association operation is the driving table, the other table is a non-driving table, and the driving table is a table preferentially queried in the two tables used in the association operation;
deduplicating values of the association field in the first query result set; and sending a result set delivery request and the deduplicated association field values to a shard database (108) in which the non-driving table is located, so that the shard database (108) in which the non-driving table is located generates temporary table data, wherein the temporary table data comprises the deduplicated association field values;
sending a non-driving table query request to the shard database (108) in which the non-driving table is located, and receiving a second query result set returned by the shard database (108) in which the non-driving table is located, wherein the second query result set is obtained by means of querying according to the non-driving table query request and the temporary table data by the shard database (108) in which the non-driving table is located;
associating the first query result set with the second result set according to the association field, to obtain a third query result set; and
returning the third query result set.

2. The method for querying data in cross-shard databases (108) according to claim 1, wherein the sending, according to the statistics information and the query condition, a driving table query request to a shard database (108) in which a driving table is located, and receiving a first query result set returned by the shard database (108) in which the driving table is located specifically comprises:
separately calculating, according to the statistics information and the query condition and by using a predefined calculation model, resources consumed by separately querying the two tables used in the association operation, wherein a table consuming fewer resources is the driving table, sending the driving table query request to the shard database (108) in which the driving table is located, and receiving the first query result set returned by the shard database (108) in which the driving table is located.

3. The method for querying data in cross-shard databases (108) according to claim 1 or 2, wherein if the shard database (108) in which the driving table is located specifically comprises two or more shard databases, the sending a driving table query request to a shard database (108) in which a driving table is located, and receiving a first query result set returned by the shard database (108) in which the driving table is located specifically comprises:
sending driving table query requests to all shard databases (108) in which the driving table is located, and receiving first query result sets returned by all the shard databases (108) in which the driving table is located; or
sending a driving table query request to a shard database (108) which meets the query condition and in which the driving table is located, and receiving a first query result set returned by the shard database (108) which meets the query condition and in which the driving table is located.

4. The method for querying data in cross-shard databases (108) according to claim 3, further comprising: saving a first query result according to a hash algorithm.

5. The method for querying data in cross-shard databases (108) according to claim 1, wherein the statistics information comprises one or more of the following: a quantity of table records in a shard database, a quantity of shards, field information, a degree of aggregation, a histogram, or network transmission costs.

6. An apparatus (106) for query in cross databases (108), configured to carry out the method of any of claims 1-5.

## Patentansprüche

1. Verfahren zur Datenabfrage in kreuzpartitionierten Datenbanken (108), umfassend:
Empfangen einer Abfrageanforderung, wobei die Abfrageanforderung eine Abfragebedingung, Kennungen von zwei in einer Assoziierungsoperation verwendeten Tabellen und ein Zuordnungsfeld umfasst;
Abfragen, in Übereinstimmung mit den Kennungen der zwei in der Assoziierungsoperation verwendeten Tabellen, von Statistikinformation dazugehöriger Shard-Datenbanken (108), in denen die beiden in der Assoziierungsoperation verwendeten Tabellen platziert sind;
Senden, entsprechend der Statistikinformation und der Abfragebedingung, einer Treibertabellen-Abfrageanforderung zu einer Shard-Datenbank (108), in der eine Treibertabelle platziert ist, und Empfangen einer ersten, durch die Shard-Datenbank (108), in der die Treibertabelle platziert ist, zurückgemeldeten Abfrageergebnisgruppe, wobei eine Tabelle der zwei in der Assoziierungsoperation verwendeten Tabellen die Treibertabelle ist, die andere Tabelle eine Nicht-Treibertabelle ist und die Treibertabelle eine vorzugsweise in den zwei in der Assoziierungsoperation verwendeten Tabellen abgefragte Tabelle ist;
Deduplizieren von Werten des Zuordnungsfeldes in der ersten Abfrageergebnisgruppe; und Senden einer Ergebnisgruppen-Zustellanforderung und der deduplizierten Zuordnungsfeldwerte zu einer Shard-Datenbank (108), in der die Nicht-Treibertabelle platziert ist, sodass die Shard-Datenbank (108), in der die Nicht-Treibertabelle platziert ist, temporäre Tabellendaten erzeugt, wobei die temporären Tabellendaten die deduplizierten Zuordnungsfeldwerte umfassen;
Senden einer Nicht-Treibertabellen-Abfrageanforderung zu der Shard-Datenbank (108), in der die Nicht-Treibertabelle platziert ist, und Empfangen einer zweiten, durch die Shard-Datenbank (108), in der die Nicht-Treibertabelle platziert ist, zurückgemeldeten Abfrageergebnisgruppe, wobei die zweite Abfrageergebnisgruppe mittels Abfragens entsprechend der Nicht-Treibertabellen-Abfrageanforderung und den temporären Tabellendaten durch die Shard-Datenbank (108), in der die Nicht-Treibertabelle platziert ist, erhalten wird;
Assoziieren der ersten Abfrageergebnisgruppe mit der zweiten Ergebnisgruppe in Übereinstimmung mit dem Zuordnungsfeld, um eine dritte Abfrageergebnisgruppe zu erhalten; und
Rückmelden der dritten Abfrageergebnisgruppe.

2. Verfahren zur Datenabfrage in kreuzpartitionierten Datenbanken (108) nach Anspruch 1, wobei das Senden, entsprechend der Statistikinformation und der Abfragebedingung, einer Treibertabellen-Abfrageanforderung zu einer Shard-Datenbank (108), in der eine Treibertabelle platziert ist, und das Empfangen einer ersten, durch die Shard-Datenbank (108), in der die Treibertabelle platziert ist, zurückgemeldeten Abfrageergebnisgruppe, im Einzelnen umfassen:
separates Berechnen entsprechend der Statistikinformation und der Abfragebedingung und unter Verwendung eines vordefinierten Berechnungsmodells von durch separates Abfragen der zwei in der Assoziierungsoperation verwendeten Tabellen verbrauchten Ressourcen, wobei eine weniger Ressourcen verbrauchende Tabelle die Treibertabelle ist; Senden der Treibertabellen-Abfrageanforderung zur Shard-Datenbank (108), in der die Treibertabelle platziert ist, und Empfangen der ersten, durch die Shard-Datenbank (108), in der die Treibertabelle platziert ist, zurückgemeldeten Abfrageergebnisgruppe.

3. Verfahren zur Datenabfrage in kreuzpartitionierten Datenbanken (108) nach Anspruch 1 oder 2, wobei, falls die Shard-Datenbank (108), in der die Treibertabelle platziert ist, spezifisch zwei oder mehr Shard-Datenbanken umfasst, das Senden einer Treibertabellen-Abfrageanforderung zu einer Shard-Datenbank (108), in der eine Treibertabelle platziert ist, und das Empfangen einer ersten, durch die Shard-Datenbank (108), in der die Treibertabelle platziert ist, zurückgemeldeten Abfrageergebnisgruppe im Einzelnen umfassen:
Senden von Treibertabellen-Abfrageanforderungen zu allen Shard-Datenbanken (108), in der die Treibertabelle platziert ist, und Empfangen von ersten, durch alle Shard-Datenbanken (108), in der die Treibertabelle platziert ist, zurückgemeldeten Abfrageergebnisgruppen; oder
Senden einer Treibertabellen-Abfrageanforderung zu einer Shard-Datenbank (108), die die Abfragebedingung erfüllt und in der die Treibertabelle platziert ist, und Empfangen einer ersten, durch die Shard-Datenbank (108), die die Abfragebedingung erfüllt und in der die Treibertabelle platziert ist, zurückgemeldeten Abfrageergebnisgruppe.

4. Verfahren zur Datenabfrage in kreuzpartitionierten Datenbanken (108) nach Anspruch 3, ferner umfassend: Speichern eines ersten Abfrageergebnisses in Übereinstimmung mit einem Hash-Algorithmus.

5. Verfahren zur Datenabfrage in kreuzpartitionierten Datenbanken (108) nach Anspruch 1, wobei die Statistikinformation eines oder mehrere der Folgenden umfasst: eine Menge von Tabellendatensätzen in einer Shard-Datenbank, eine Menge von Shards, Feldinformation, einen Aggregationsgrad, ein Histogramm oder Netzwerkübertragungskosten.

6. Vorrichtung (106) zur Abfrage in Kreuz-Datenbanken (108), ausgelegt zum Ausführen des Verfahrens nach einem der Ansprüche 1-5.

## Revendications

1. Procédé pour interroger des données dans des bases de données de fragments croisées (108), comprenant de :
recevoir une demande d'interrogation, dans lequel la demande d'interrogation comprend une condition d'interrogation, des identificateurs de deux tables utilisées dans une opération d'association, et un champ d'association ;
interroger, en fonction des identificateurs des deux tables utilisées dans l'opération d'association, des informations statistiques de bases de données de fragments respectives (108) dans lesquelles sont situées les deux tables utilisées dans l'opération d'association ;
envoyer, en fonction des informations statistiques et de la condition d'interrogation, une demande d'interrogation de table de pilotage à une base de données de fragments (108) dans laquelle se trouve une table de pilotage, et recevoir un premier ensemble de résultats d'interrogation renvoyé par la base de données de fragments (108) dans laquelle se trouve la table de pilotage, dans lequel une table des deux tables utilisées dans l'opération d'association est la table de pilotage, l'autre table est une table non de pilotage, et la table de pilotage est une table interrogée préférentiellement dans les deux tables utilisées dans l'opération d'association ;
dédupliquer des valeurs du champ d'association dans le premier ensemble de résultats d'interrogation ; et envoyer une demande de remise d'ensemble de résultats et les valeurs de champ d'association dédupliquées à une base de données de fragments (108) dans laquelle se trouve la table non de pilotage, de sorte que la base de données de fragments (108) dans laquelle se trouve la table de non-pilotage génère des données de table temporaires, dans lequel les données de table temporaires comprennent les valeurs de champ d'association dédupliquées ;
envoyer une demande d'interrogation de table de non-pilotage à la base de données de fragments (108) dans laquelle se trouve la table de non-pilotage, et recevoir un second ensemble de résultats d'interrogation renvoyé par la base de données de fragments (108) dans laquelle se trouve la table de non-pilotage, dans lequel le second ensemble de résultats d'interrogation est obtenu au moyen de l'interrogation selon la demande d'interrogation de table de non-pilotage et les données de table temporaires par la base de données de fragments (108) dans laquelle se trouve la table de non-pilotage ;
associer le premier ensemble de résultats d'interrogation au second ensemble de résultats conformément au champ d'association, pour obtenir un troisième ensemble de résultats d'interrogation ; et
renvoyer le troisième ensemble de résultats d'interrogation.

2. Procédé pour interroger des données dans des bases de données de fragments croisées (108) selon la revendication 1, dans lequel l'envoi, en fonction des informations statistiques et de la condition d'interrogation, d'une demande d'interrogation de table de pilotage à une base de données de fragments (108) dans laquelle se trouve une table de pilotage, et la réception d'un premier ensemble de résultats d'interrogation renvoyé par la base de données de fragments (108) dans laquelle se trouve la table de pilotage, comprennent spécifiquement de :
calculer séparément, en fonction des informations statistiques et de la condition d'interrogation et en utilisant un modèle de calcul prédéfini, des ressources consommées en interrogeant séparément les deux tables utilisées dans l'opération d'association, dans lequel une table consommant moins de ressources est la table de pilotage, envoyer la demande d'interrogation de table de pilotage à la base de données de fragments (108) dans laquelle se trouve la table de pilotage, et recevoir le premier ensemble de résultats d'interrogation renvoyé par la base de données de fragments (108) dans laquelle se trouve la table de pilotage.

3. Procédé pour interroger des données dans des bases de données de fragments croisées (108) selon la revendication 1 ou 2, dans lequel si la base de données de fragments (108) dans laquelle se trouve la table de pilotage comprend spécifiquement deux bases de données de fragments ou plus, l'envoi d'une demande d'interrogation de table de pilotage à une base de données de fragments (108) dans laquelle se trouve une table de pilotage, et la réception d'un premier ensemble de résultats d'interrogation renvoyé par la base de données de fragments (108) dans laquelle se trouve la table de pilotage, comprennent spécifiquement de :
envoyer des demandes d'interrogation de table de pilotage à toutes les bases de données de fragments (108) dans lesquelles se trouve la table de pilotage, et recevoir de premiers ensembles de résultats d'interrogation renvoyés par toutes les bases de données de fragments (108) dans lesquelles se trouve la table de pilotage ; ou
envoyer une demande d'interrogation de table de pilotage à une base de données de fragments (108) qui satisfait la condition d'interrogation et dans laquelle se trouve la table de pilotage, et recevoir un premier ensemble de résultats d'interrogation renvoyé par la base de données de fragments (108) qui satisfait la condition d'interrogation et dans laquelle se trouve la table de pilotage.

4. Procédé pour interroger des données dans des bases de données de fragments croisées (108) selon la revendication 3, comprenant en outre de : enregistrer un premier résultat d'interrogation selon un algorithme de hachage.

5. Procédé pour interroger des données dans des bases de données de fragments croisées (108) selon la revendication 1, dans lequel les informations statistiques comprennent un ou plusieurs des éléments suivants : une quantité d'enregistrements de table dans une base de données de fragments, une quantité de fragments, des informations de champ, un degré d'agrégation, un histogramme, ou des coûts de transmission de réseau.

6. Appareil (106) pour interroger des bases de données croisées (108), configuré pour mettre en oeuvre le procédé selon l'une quelconque des revendications 1 à 5.
